# EUROPEAN PATENT SPECIFICATION

(11) **EP 2 851 835 B1**
(45) Date of publication and mention of the grant of the patent: **11.09.2019**
(21) Application number: 14002658.4
(22) Date of filing: 30.07.2014
(51) Int. Cl.: G06F 21/62

(54) **INFORMATION PROCESSING APPARATUS AND METHOD FOR CONTROLLING THE SAME, AND PROGRAM**
INFORMATIONSVERARBEITUNGSVORRICHTUNG UND VERFAHREN ZUR STEUERUNG DAVON UND PROGRAMM
APPAREIL DE TRAITEMENT D'INFORMATIONS, PROCÉDÉ DE CONTRÔLE ASSOCIÉ ET PROGRAMME

(30) Priority: 24.09.2013 JP 2013197507
(43) Date of publication of application: 25.03.2015
(73) Proprietor: Canon Kabushiki Kaisha, Ohta-ku Tokyo (JP)
(72) Inventor: Fujii, Manabu, Tokyo (JP)
(74) Representative: WESER & Kollegen Patentanwälte PartmbB

(56) References cited:
- WO-A1-2012/176922
- JP-A- 2005 028 997
- US-A1- 2011 289 591
- Anonymous: "<uses-feature> | Android Developers", , 26 April 2013 (2013-04-26), XP055163842, Retrieved from the Internet: URL:https://web.archive.org/web/2013042609 5025/http://developer.android.com/guide/to pics/manifest/uses-feature-element.html [retrieved on 2015-01-21]
- Anonymous: "AppLocker Overview", , 18 October 2012 (2012-10-18), XP055164245, Retrieved from the Internet: URL:https://technet.microsoft.com/en-us/li brary/hh831440.aspx [retrieved on 2015-01-22]
- FOLEY S N ED - ASSOCIATION FOR COMPUTING MACHINERY: "CONDUIT CASCADES AND SECURE SYNCHRONIZATION", PROCEEDINGS OF THE NEW SECURITY PARADIGMS WORKSHOP. (NSPW). BALLYCOTTON, COUNTY CORK, IRELAND, SEPT. 18 - 22, 2000; [NEW SECURITY PARADIGMS WORKSHOP], NEW YORK, NY : ACM, US, 18 September 2000 (2000-09-18), pages 141-150, XP000988608, DOI: 10.1145/366173.366205 ISBN: 978-1-58113-260-1

## Description

### BACKGROUND OF THE INVENTION

### Field of the Invention

The present invention relates to an information processing apparatus and a method for controlling the same, and a program.

### Description of the Related Art

Multi-functional image forming apparatuses have become widespread and handle more and more confidential documents and data. Modern image forming apparatuses therefore guarantee their security by configuring settings relating to security. For example, settings for forcibly increasing the number of password characters or enhancing a complexity of the password are configured to perform control such as making a weak password unusable.

When such security settings are configured to control behavior of the apparatus, a program that is pre-installed in the apparatus has a function to control the behavior according to the settings. However, in modern image forming apparatuses, it is possible to install a program such as a java (registered trademark) application afterward, and such a program may not have the function to control the operation according to the settings.

A method for statically restricting a function of a program when the program is installed has been proposed and is regarded as a well-known technique. For example, when a program is installed that has a function to communicate with an external device using a network, it is possible to turn off the communication function itself. In this case, the program is installed in a state in which the communication function is disenabled. Using this technique, it is possible to install a program in a state in which a function that is problematic in the terms of security is restricted.

However, the well-known technique cannot dynamically restrict a function according to settings of an apparatus. There is furthermore the problem, for example, that it is necessary to provide a mechanism for restricting a function for each module in the program, resulting in an increase in the development cost.

In order to solve the above-described problems, Japanese Patent Laid-Open No. 2005-28997 realizes a mechanism in which an activation condition is described in a manifest file of a java application, and the application is activated only when the device condition meets the activation condition.

However, the method of Japanese Patent Laid-Open No. 2005-28997 has the problems, for example, that it is difficult to control the application according to security settings, and that it is impossible to show the control state in a manner in which a user can easily understand it.

### SUMMARY OF THE INVENTION

The present invention in its first aspect provides an information processing apparatus as specified in claims 1 to 14.

The present invention in its second aspect provides a method as specified in claim 15.

The present invention in its third aspect provides a program as specified in claim 16.

According to the present invention, when a program such as a java application is installed afterward, it is possible to control the application according to security settings of a device, and to show the control state in a manner in which a user can easily understand it.

Further features of the present invention will become apparent from the following description of exemplary embodiments (with reference to the attached drawings).

### BRIEF DESCRIPTION OF THE DRAWINGS

FIG. 1 is a diagram illustrating an example of a system configuration of an image forming apparatus according to the present embodiments.
FIG. 2 is a diagram illustrating an example of a hardware configuration of the image forming apparatus according to the present embodiments.
FIG. 3 is a diagram illustrating an example of a software configuration of the image forming apparatus according to the present embodiments.
FIG. 4 is a flowchart in which a policy is edited according to a first embodiment.
FIG. 5A is a diagram illustrating an example of a policy editing screen according to the present embodiment.
FIG. 5B is a diagram illustrating an example of the policy editing screen according to the present embodiment.
FIG. 5C is a diagram illustrating an example of the policy editing screen according to the present embodiment.
FIG. 6 is a diagram illustrating an example of an application management screen according to the present embodiment.
FIG. 7 is a diagram illustrating an example of a policy information screen according to the first embodiment.
FIG. 8 is a diagram illustrating an example of a manifest file of an extended program according to the present embodiment.
FIG. 9 is a flowchart in which an application policy version is displayed on the policy information screen.
FIGS. 10A and 10B are flowcharts in which a comprehensive determination result is displayed on the policy information screen of the first embodiment.
FIGS. 11A and 11B are flowcharts in which the extended program is activated according to the first embodiment.
FIG. 12 is a diagram illustrating an example of a warning screen that is displayed when the extended program is activated according to the present embodiment.
FIG. 13 is a flowchart in which the extended program operates in compliance with a policy according to the present embodiment.
FIG. 14 is a flowchart in which a list of extended programs that were stopped after editing of a policy is displayed according to a second embodiment.
FIG. 15 is a diagram illustrating an example of a screen that displays a list of extended programs that were stopped when editing of a policy according to the second embodiment.
FIG. 16 is a diagram illustrating an example of a policy information screen according to the second embodiment.
FIG. 17 is a flowchart in which it is displayed whether or not the application is an application to be excluded according to the second embodiment.
FIG. 18 is a diagram illustrating an example of an exclusion list according to the second embodiment.
FIGS. 19A and 19B are flowcharts in which a comprehensive determination result is displayed on the policy information screen according to the second embodiment.
FIGS. 20A and 20B are flowcharts in which an extended program is activated according to the second embodiment.
FIG. 21 is a diagram illustrating an example of an activation prohibiting screen that is displayed when the extended program is activated according to the second embodiment.
FIG. 22 is a diagram illustrating a device policy version according to the present embodiments.

### DESCRIPTION OF THE EMBODIMENTS

Hereinafter, embodiments for implementing the present invention will be described with reference to the drawings.

### Definition of Terminology

Here, terms in the present invention will be defined.

"Setting value" refers to a software parameter that is set in an image forming apparatus and at which an operation of the image forming apparatus is switched.

"Security policy" is a collective term of setting values in terms of security, of setting values configured in the image forming apparatus. The security policy is divided into categories such as an authentication policy and a network policy depending on its purpose. Hereinafter, the security policy is abbreviated and referred to only as a "policy".

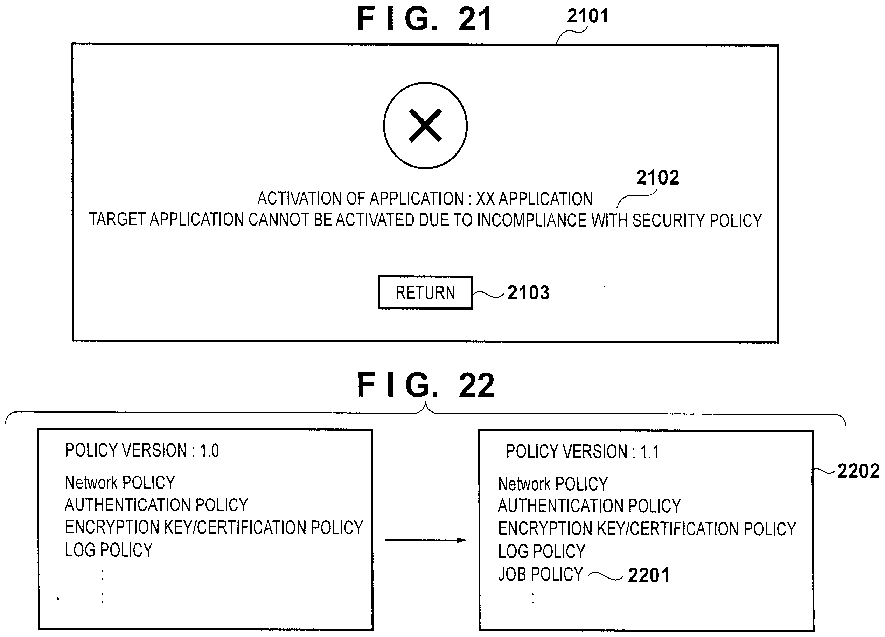

"Device policy version" is the number assigned to a group of policy setting items that are set in the image forming apparatus. A device policy version number increases when a new policy setting item of the image forming apparatus is added. FIG. 22 shows an example in which a device policy version number increases. As described above, a policy is divided into some categories, and a device policy version is assigned to each of the divided groups. For example, when a job policy 2201 is newly added to the policy of the device policy version "1.0" of the image forming apparatus, the device policy version number increases to a device policy version 2202 of "1.1".

"Application policy version" is the number that is declared when a program running on the image forming apparatus has a specification relating to policy setting items. The application policy version is the number that is declared when the program corresponds to policy setting items corresponding to a device policy version. It is assumed, for example, that a group of policy setting items of the device policy version "1.0" includes a setting for controlling the number of password characters, and a program has a specification that uses a password. In this case, if this program is implemented so that the number of password characters can appropriately be changed according to the setting of the policy, the application policy version of this program is "1.0" that is the same value as that of the device policy version. The application policy version is declared in a manifest file.

"Policy level" shows a regulation level (restriction) of a content (operation restriction) of control that the image forming apparatus performs on a program that does not correspond to any of policy setting items belonging to a device policy version. The regulation level of the content of control increases with an increase in the policy level. The embodiments of the present specification will be described taking the case where policy levels have four stages of 1 to 4 as an example. The contents for respective policy levels of control with respect to a program are as follows:
Policy level 1: Control is not particularly performed.
Policy level 2: A warning screen is displayed when a program that does not comply with the policy is activated.
Policy level 3: When a program that does not comply with the policy is activated, an application that is not registered in an exclusion list is not activated.
Policy level 4: A program that does not comply with the policy is no way activated.

The content of control is changed according to the policy level in this way.

"Exclusion list" refers to a list in which programs that are subject to exclusion from policy application are registered. The programs registered in this list are not controlled by the image forming apparatus irrespective of whether or not the programs comply with the policy.

The following description is given based on the above-described definition. Note that terms other than ones described here will appropriately be explained.

### First Embodiment

Cases according to the present embodiment include the following three operations of a user.

I. The user edits a policy;
II. The user confirms policy information of an extended program; and
III. The user activates the extended program.

### System Configuration

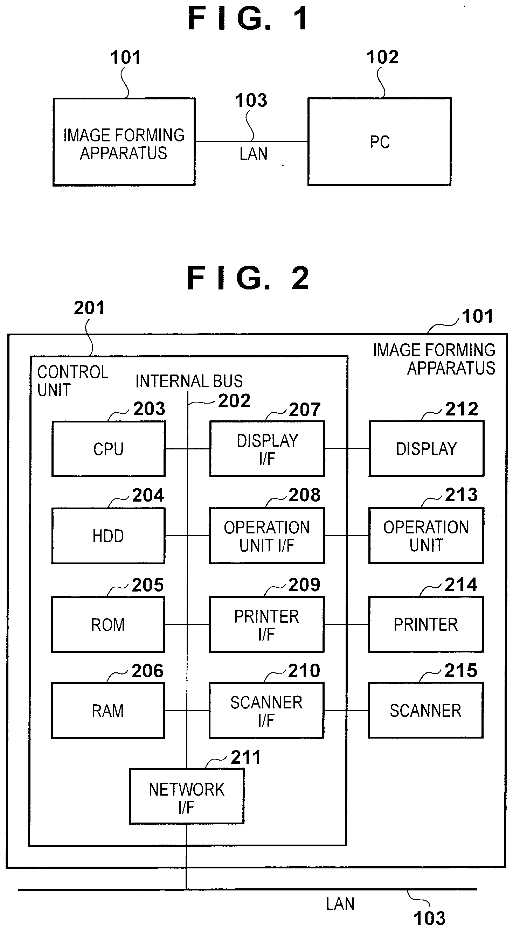

An example of a system configuration according to the present embodiment will be described with reference to FIG. 1. An image forming apparatus 101 is an apparatus such as a digital multi-function peripheral (MFP), in which a print function, a copy function, a facsimile function, and a transmission function (such as e-mail or FTP) are incorporated, a printer, a scanner, a facsimile, or the like. Note that the following description will be given taking the image forming apparatus as an example, but other information processing apparatus may be employed as long as it is an apparatus in which an extended program can be installed.

A personal computer (PC) 102 is a general-purpose personal computer, and may be a desktop-type computer, a note-type computer, or the like. The PC 102 can, by being connected to the image forming apparatus 101, perform editing of a policy, which will be described later, or activate an extended program 303, for example. A LAN 103 is a local area network such as a wired/wireless network. The image forming apparatus 101 is connectable to another image forming apparatus (not shown), the PC 102, or the Internet (not shown) via the LAN 103.

### Hardware Configuration

An example of a hardware configuration of the image forming apparatus 101 according to the present embodiment will be described with reference to FIG. 2. A control unit 201 performs overall control of the entire image forming apparatus 101. An internal bus 202 connects constituent components of the control unit 201. A CPU 203 executes a control program stored in a ROM 205. An HDD 204 is a non-volatile storage area and stores information such as setting values and running logs. The HDD 204 also stores a policy, which is a feature of the present invention. The ROM 205 stores a control program of the image forming apparatus 101. A RAM 206 is a work memory area in which a program is executed, and is used as a temporary storage area.

A display I/F 207 connects a display 212 and the control unit 201. An operation unit I/F 208 connects an operation unit 213 and the control unit 201. A printer I/F 209 connects a printer 214 and the control unit 201. A scanner I/F 210 connects a scanner 215 and the control unit 201. A network I/F 211 is an interface unit for connecting to the LAN 103, and communicates with an external apparatus (not shown), the Internet (not shown), and the like via the LAN 103.

The display 212 displays an operation of the user, error information depending on the state of the image forming apparatus 101, and the like. The operation unit 213 includes key input means (not shown), which are controlled by the CPU 203. An operator gives instructions relating to various type of settings such as reading with a scanner and outputting of printing, by performing key-input, and instructions to activate/stop the operation. The printer 214 performs printing of image data on a recording medium such as paper. The image data to be printed by the printer 214 is transferred to the printer 214 from the control unit 201 via the printer I/F 209. The scanner 215 reads an image on a document, generates image data, and transfers the generated image data to the control unit 201 via the scanner I/F 210.

### Software Configuration

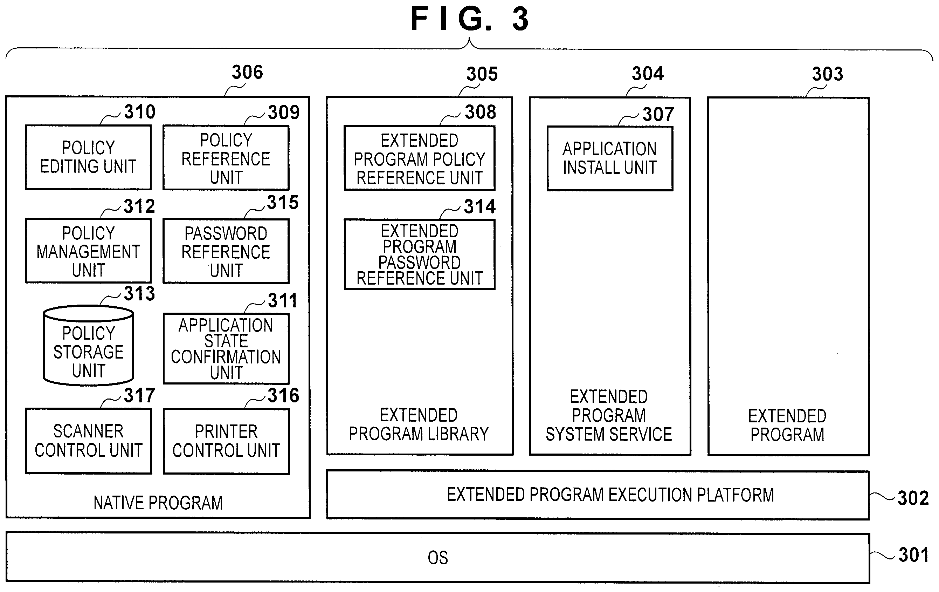

FIG. 3 shows an example of a software configuration of the image forming apparatus 101 according to the present embodiment. Each constituent component of FIG. 3 that is indicated in a square denotes software. Note that the pieces of software of the image forming apparatus 101 are stored in a storage unit such as a ROM 205, are read out to the RAM 206, and are executed by the CPU 203. Furthermore, various types of information for use in the execution are stored in the RAM 206 or the HDD 204, and are communicated between the software functions. Furthermore, communication with an external device is performed using the network I/F 211.

An Operating System (OS) 301 is system software that provides basic functions that are used by many pieces of application software, such as an input/output function and a function of management of disks and memories, and manages the entire system. An extended program execution platform 302 is a platform that operates on the OS 301 and is necessary for the operation of the extended program 303. By employing the extended program execution platform 302, it is possible to operate the extended program 303 without depending on the OS 301.

The extended program 303 is a program that runs on the extended program execution platform 302. The extended program 303 can access another extended program 303 or a module such as the RAM 206 of the image forming apparatus 101 via the extended program execution platform 302 or an extended program system service 304.

The extended program system service 304 is a program that runs on the extended program execution platform 302. Similar to the extended program 303, the extended program system service 304 is a useful utility library. The extended program system service 304 is made available by being called from the extended program 303.

An extended program library 305 is a program that runs on the extended program execution platform 302. While the extended program 303 serving as a single application has a life cycle of being activated, executed, and stopped, the extended program library 305 itself does not have a life cycle but is called by another program to provide a specific function.

A native program 306 is a control program originally installed in a printer, a scanner, and the like.

An application install unit 307 is included in the extended program system service 304, and is a program for installing and activating the extended program 303. When installing the extended program 303, the application install unit 307 checks the amount of resource or the state of compliance with a policy. Furthermore, the application install unit 307 has a servlet function, and uses software such as a browser (not shown) on the PC 102 to receive an operation such as installation of the extended program 303.

An extended program policy reference unit 308 is included in the extended program library 305 and is a program for referencing contents of a policy stored in a policy storage unit 313 from the extended program 303. Although the extended program policy reference unit 308 has the same function as that of a policy reference unit 309, which will be described later, the policy reference unit 309 cannot directly be used by the extended program 303 and thus the reference is made via the extended program policy reference unit 308.

The policy reference unit 309 is included in the native program 306 and is a program for referencing contents of a policy stored in the policy storage unit 313. A policy editing unit 310 is included in the native program 306 and is a program for editing a policy. The policy editing unit 310 provides a policy editing screen on the PC 102, and accepts editing of a policy from the user.

An application state confirmation unit 311 is included in the native program 306 and is a program that a policy management unit 312 uses to confirm the activation state of the extended program 303 at the time of editing of a policy. The application state confirmation unit 311 inquires the application install unit 307 about the activation state of the extended program 303.

A policy management unit 312 is included in the native program 306 and is a program for managing a policy. Upon receiving a policy editing instruction from the policy editing unit 310, the policy management unit 312 rewrites a policy stored in the policy storage unit 313. At that timing, the policy management unit 312 notifies the application state confirmation unit 311 of the change, and the application state confirmation unit 311 confirms the activation state of the extended program 303 after editing of the policy. The policy storage unit 313 has stored therein policies. The policies are stored in a file format.

An extended program password reference unit 314 is included in the extended program library 305 and is a program for referencing setting items of a password-related policy stored in the policy storage unit 313. Although the extended program password reference unit 314 has the same function as that of a password reference unit 315, which will be described later, the password reference unit 315 cannot directly be used by the extended program 303 and thus the reference is made via the extended program password reference unit 314.

A password reference unit 315 is included in the native program 306 and is a program for referencing setting items of the password-related policy stored in the policy storage unit 313. The printer control unit 316 is a program for controlling the printer 214. A scanner control unit 317 is a program for controlling the scanner 215.

### Processing Flow

Hereinafter, processing in each operation stage by the user according to the present embodiment will be described.

### I. The user edits a policy;

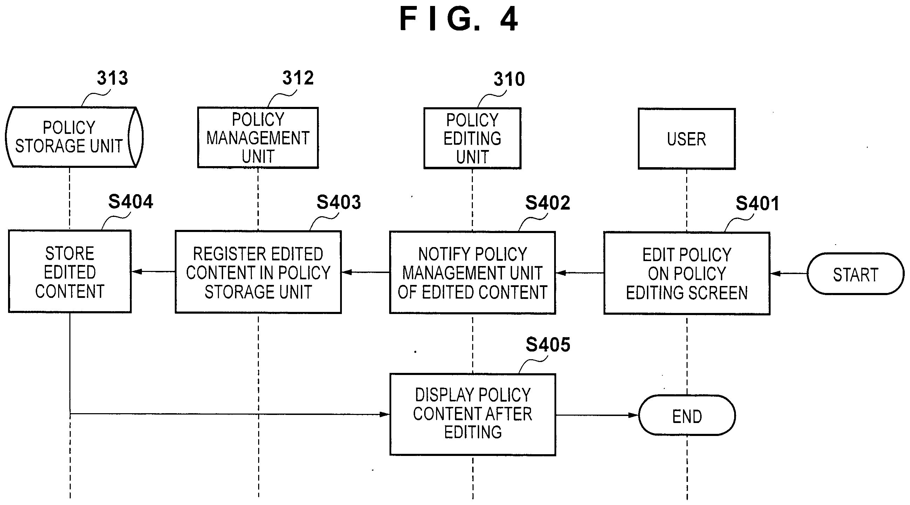

FIG. 4 is a flowchart illustrating a flow in which a user edits a policy setting according to the present embodiment. FIG. 4 starts with the step in which the user edits a policy setting, and ends with the step in which the application install unit 307 displays policy contents after editing.

In step S401, the user edits a policy. Editing of a policy can be performed on the PC 102. When the user operated the PC 102 and accessed the policy editing unit 310, the policy editing unit 310 transmits a policy editing screen, which will be described later, in the HTML (Hyper Text Markup Language) format to the PC 102. The user uses software such as a browser (not shown) on the PC 102 to let the policy editing screen be displayed, and edits a policy.

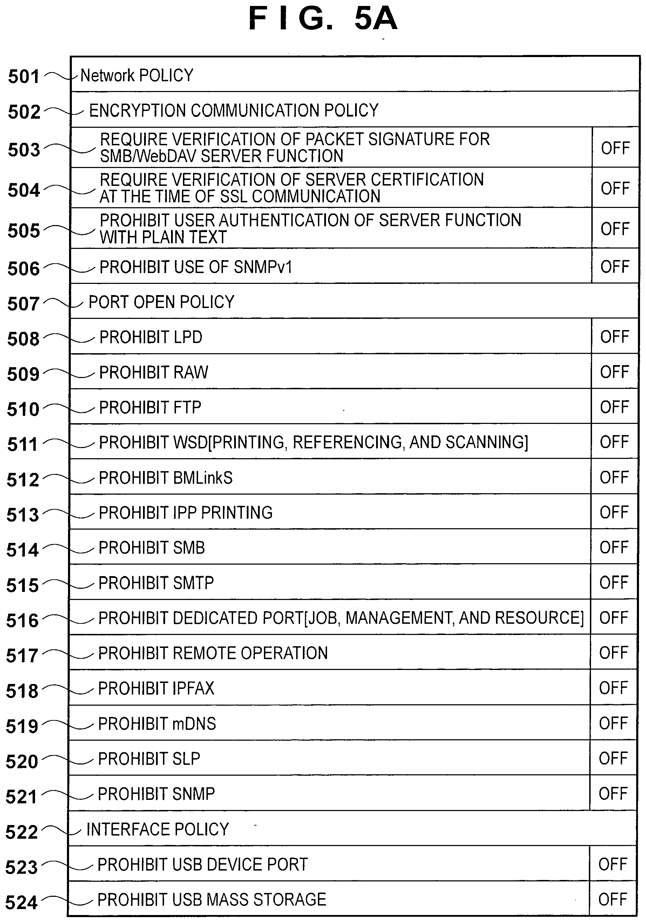

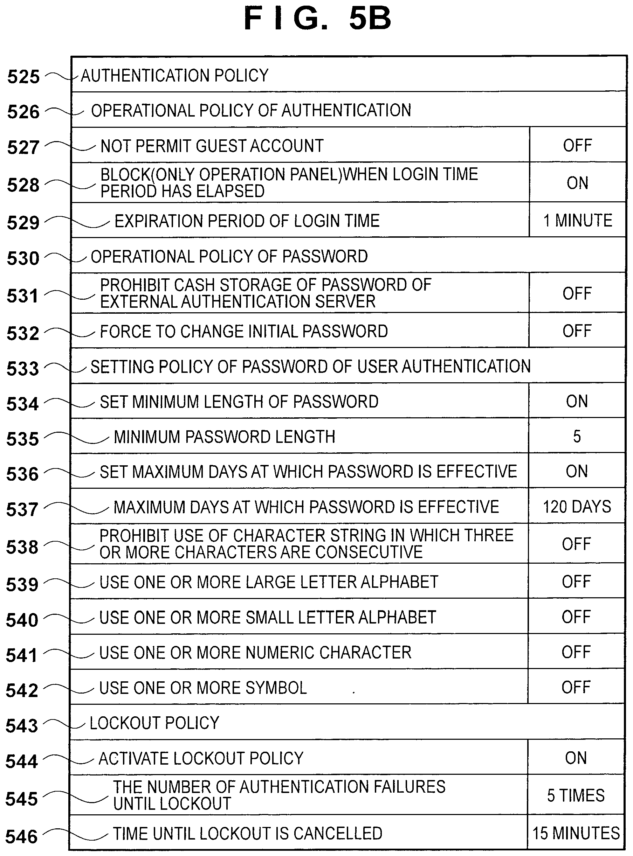

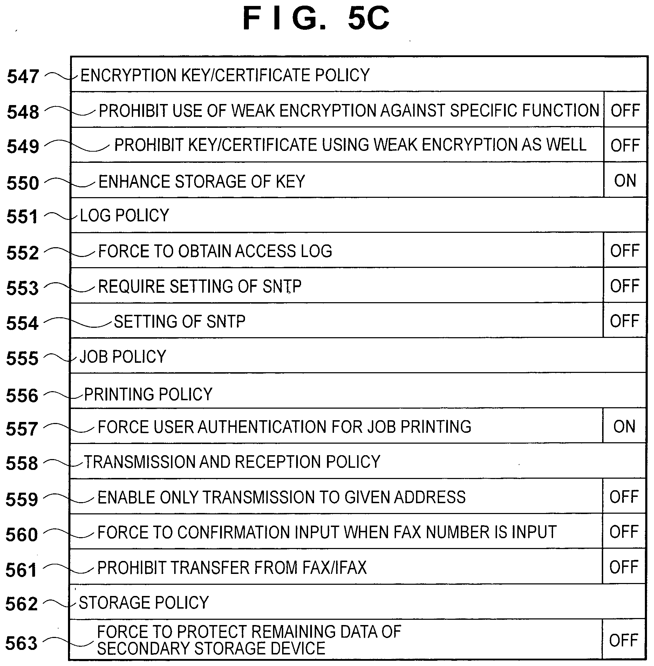

FIGS. 5A to 5C show examples of the policy editing screen. Setting items 501 to 563 in FIGS. 5A to 5C are examples of policy setting items. The user can freely edit policies on the policy editing screen. These policy setting items are classified into items that are referenced by the password reference unit 315 and items that are referenced by the policy reference unit 309. Although the detailed description of the classification is omitted, a setting item 535 of "minimum password length" and a setting item 524 of "prohibit USB mass storage", serving as representative examples of the respective types of items, will be hereinafter described in detail.

The setting item 535 of "minimum password length" is a setting item (condition) for controlling the length of a password that is used by a program. The program that uses a password obtains information on the setting item 535 of "minimum password length" that is stored in the policy storage unit 313 via the extended program password reference unit 314 or the password reference unit 315. If the length of the password used by the program does not satisfy the value set in the setting item 535 of "minimum password length", the program operates such that the length of the password is changed so as to satisfy the value set in the setting item 535 of "minimum password length".

The setting item 524 of "prohibit USB mass storage" is a setting item for controlling whether or not a program can use USB mass storage. A program that uses USB mass storage references the value set in the setting item 524 of "prohibit USB mass storage" stored in the policy storage unit 313 via the extended program policy reference unit 308 or the policy reference unit 309. If the setting item 524 shows that use of USB mass storage is prohibited, the program operates so as to restrict the function to use USB mass storage.

Note that the policy setting items 501 to 563 shown in FIGS. 5A to 5C are examples, and the present invention is not limited to these.

In step S402, the policy editing unit 310 notifies the policy management unit 312 of the edited policy content. In step S403, the policy management unit 312 registers the edited policy content in the policy storage unit 313. In step S404, the policy storage unit 313 stores the edited policy content. After registration by editing, the policy editing unit 310 notifies, in step S405, the user of the edited policy content.

With the above-described procedures, the user can set a policy in an arbitrary manner. Furthermore, since the policy is stored in the policy storage unit 313 in a file format, it is also possible to edit the policy by directly importing a file, instead of editing an independent setting item.

### II. The user confirms policy information of an extended program;

The user can confirm policy information of an extended program 303 by connecting the PC 102 to the image forming apparatus 101 via the LAN 103. The user first lets an application management screen, which will be described later, be displayed on the PC 102.

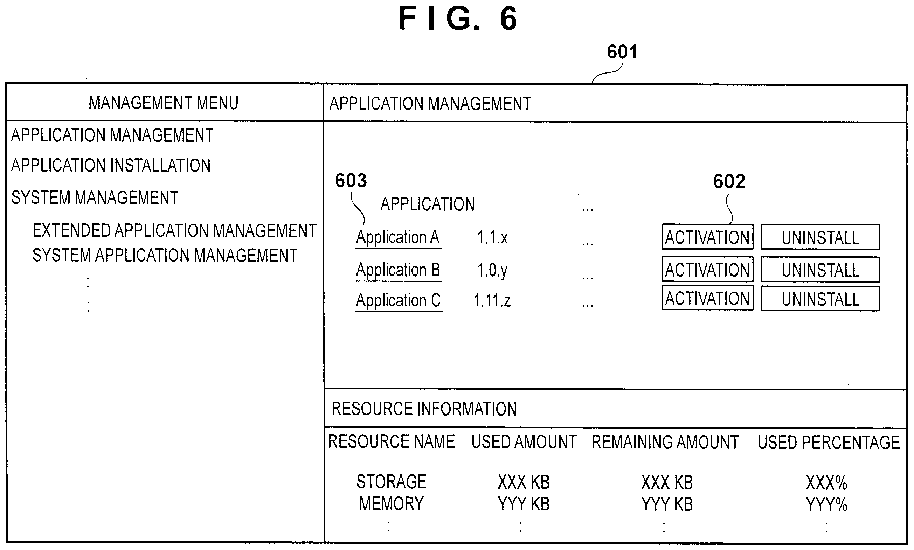

FIG. 6 shows an example of the application management screen according to the present embodiment. An application management screen 601 is a screen for managing extended programs 303 that can be installed in the image forming apparatus 101 afterward. The application management screen 601 is generated by the application install unit 307 and transmitted in the HTML format to the PC 102. The user can operate the application management screen 601 using software such as a browser (not shown) on the PC 102.

Activation buttons 602 are buttons for activating the respective extended programs 303. By the user pressing an activation button 602, the corresponding extended program 303 can be activated. In the present embodiment, when the activation button 602 has been pressed, policy confirmation is made, and processing for activating the extended program 303 is performed according to the below-described flowchart. Application names 603 indicate the respective names of the extended programs 303. Each application name 603 has a link, and the screen shifts to a corresponding policy information screen 701 by the application name 603 being pressed.

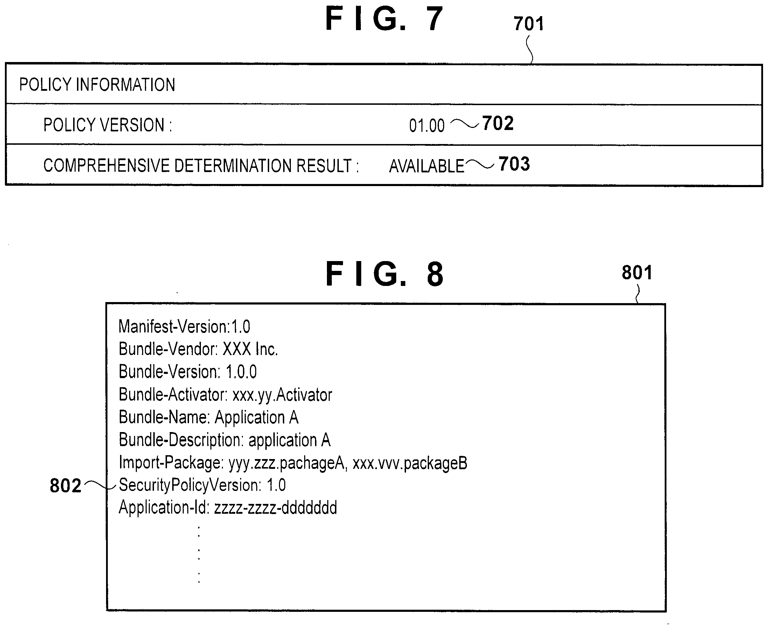

FIG. 7 shows an example of the policy information screen 701. The user can confirm, in the policy information screen 701, whether or not the extended program 303 complies with the policy. An application policy version 702 shows an application policy version of the extended program 303. In order to show the compliance with the policy, the extended program 303 needs to describe an application policy version in a manifest file thereof. A comprehensive determination result 703 is a determination result showing whether or not the extended program 303 is available under the policy currently stored in the policy storage unit 313.

FIG. 8 shows an example of the manifest file of the extended program 303. A manifest file 801 is a file in which information on the extended program 303 or the like is stored and that is to be bundled with the extended program 303. The manifest file is, for example, a file in which declarative information such as the application name or the version is described, and other information may also be included in the file.

An application policy version 802 in the manifest file 801 is an item that declares the application policy version to which the extended program 303 corresponds. By comparing the application policy version 802 with the device policy version stored in the policy storage unit 313, it is possible to determine whether or not the extended program 303 complies with the policy. Not only a value indicating the version but also "0" may be described as the application policy version 802. If the application policy version 802 is "0", it shows that the extended program 303 does not have a specification relating to the policy, and the extended program 303 will be excluded from policy determination targets. That is, on the basis of the application policy version 802, the extended program 303 can be defined as being subject to exclusion from operation control based on the policy.

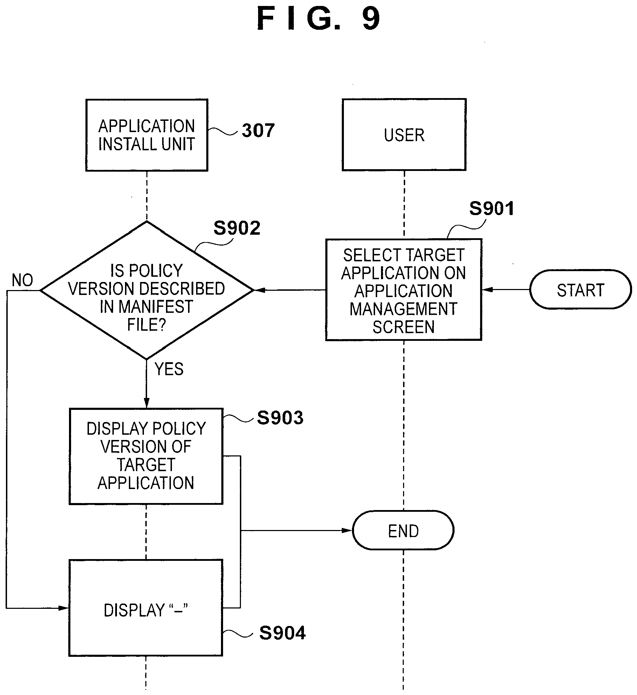

The following will describe flowcharts in which the application policy version 702 and the comprehensive determination result 703 of the extended program 303 are displayed. FIG. 9 shows the flowchart in which the application install unit 307 checks the manifest file of the extended program 303 and displays the application policy version 702 on the policy information screen 701.

In step S901, the user presses an application name 603 displayed on the application management screen 601.

In step S902, the application install unit 307 checks the manifest file of the extended program 303 that corresponds to the pressed application name 603. If the application policy version 802 is described in the manifest file (YES in step S902), the procedure advances to step S903, and if the application policy version 802 is not described in the manifest file (NO in step S902), the procedures advances to step S904. In step S903, the application install unit 307 displays the application policy version of the target extended program 303 in the field of the application policy version 702 on the policy information screen 701. In step S904, the application install unit 307 displays "-" in the field of the application policy version 702 on the policy information screen 701.

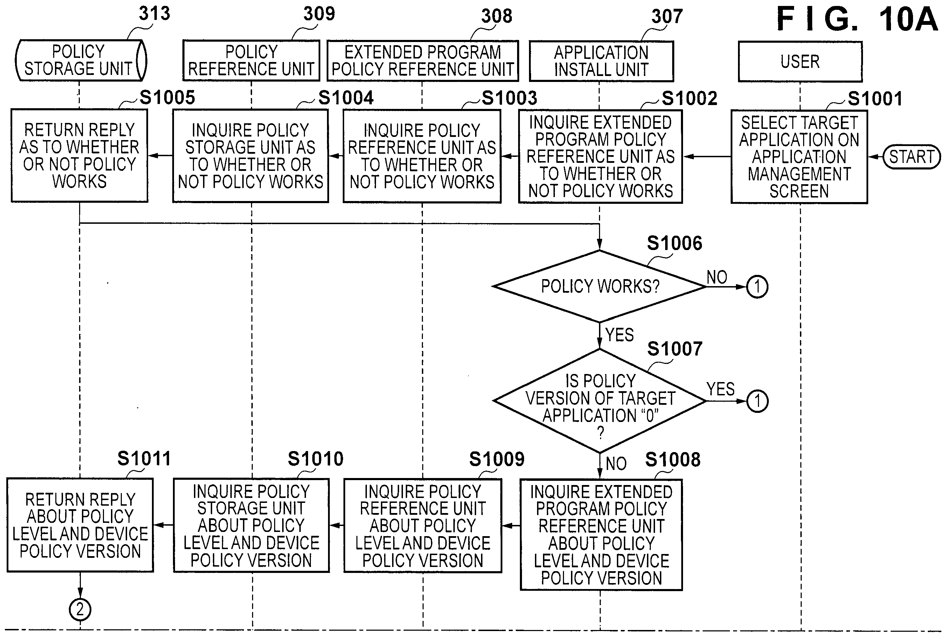

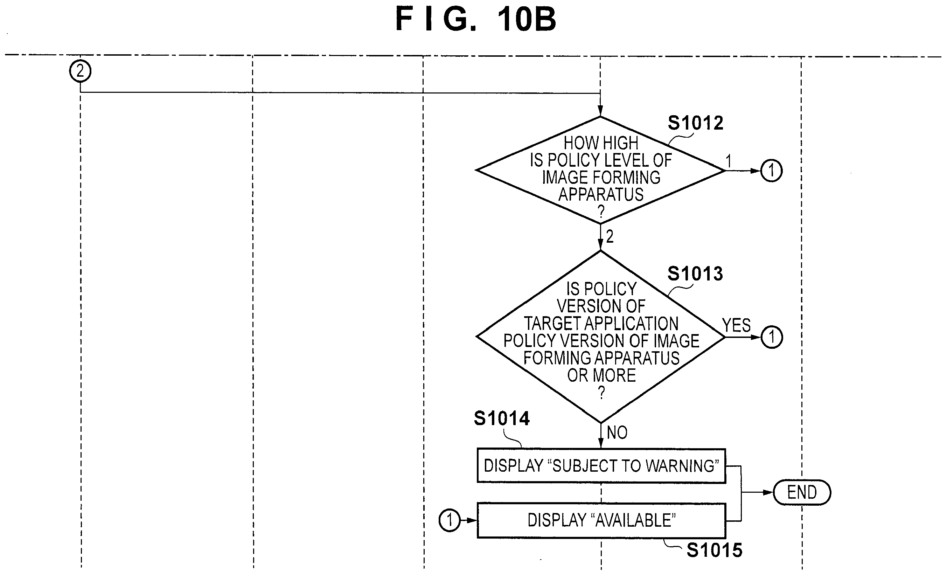

FIGS. 10A and 10B show the flowcharts in which the application install unit 307 displays the comprehensive determination result 703 on the policy information screen 701.

In step S1001, the user selects, on the application management screen 601, the target extended program 303. In step S1002, the application install unit 307 inquires the extended program policy reference unit 308 as to whether or not the policy works.

In step S1003, the extended program policy reference unit 308 inquires the policy reference unit 309 as to whether or not the policy works. In step S1004, the policy reference unit 309 inquires the policy storage unit 313 as to whether or not the policy works. In step S1005, the policy storage unit 313 returns a reply as to whether or not the policy works to the application install unit 307 via the policy reference unit 309. In step S1006, the application install unit 307 determines, based on the result confirmed in step S1002, whether or not the policy works. If it is determined that the policy works (YES in step S1006), the procedure advances to step S1007, and if it is determined that the policy does not work (NO in step S1006), the procedure advances to step S1015.

In step S1007, the application install unit 307 checks the manifest file of the target extended program 303. If the result of checking of the manifest file shows that the application policy version 802 is "0" (YES in step S1007), the procedure advances to step S1015, and if the result of checking of the manifest file shows that the application policy version 802 is a value other than "0" (NO in step S1007), the procedure advances to step S1008.

In step S1008, the application install unit 307 inquires the extended program policy reference unit 308 about the policy level and the device policy version. In step S1009, the extended program policy reference unit 308 inquires the policy reference unit 309 about the policy level and the device policy version. In step S1010, the policy reference unit 309 inquires the policy storage unit 313 about the policy level and the device policy version. In step S1011, the policy storage unit 313 returns the policy level and the device policy version to the application install unit 307 via the policy reference unit 309.

In step S1012, the application install unit 307 determines the policy level of the image forming apparatus 101 based on the result returned from the policy storage unit 313. If the set policy level is "1", the procedure advances to step S1015, and if the policy level is "2", the procedure advances to step S1013.

In step S1013, the application install unit 307 compares the application policy version 802 described in the manifest file 801 of the extended program 303 with the device policy version stored in the policy storage unit 313. If the comparison result shows that the application policy version 802 of the extended program 303 is the device policy version of the image forming apparatus 101 or more (YES in step S1013), the procedure advances to step S1015, and otherwise (NO in step S1013) to S1014.

In step S1014, the application install unit 307 displays "subject to warning" in the field of the comprehensive determination result 703 on the policy information screen 701. In step S1015, the application install unit 307 displays "available" in the field of the comprehensive determination result 703 on the policy information screen 701. Note that the message contents that are here displayed are not limited to these, and any content may be displayed as long as it corresponds to the determination result.

With the above-described procedures, it is possible to display the application policy version 702 and the comprehensive determination result 703 of the extended program 303 on the policy information screen 701. By browsing the policy information screen 701, the user can confirm the policy information of the extended program 303.

### III. The user activates an extended program.

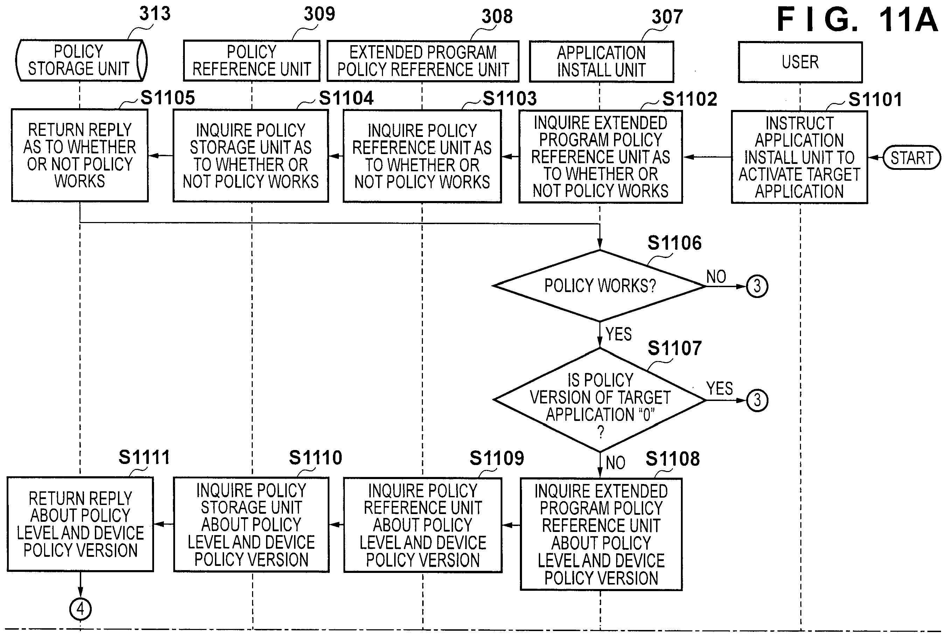

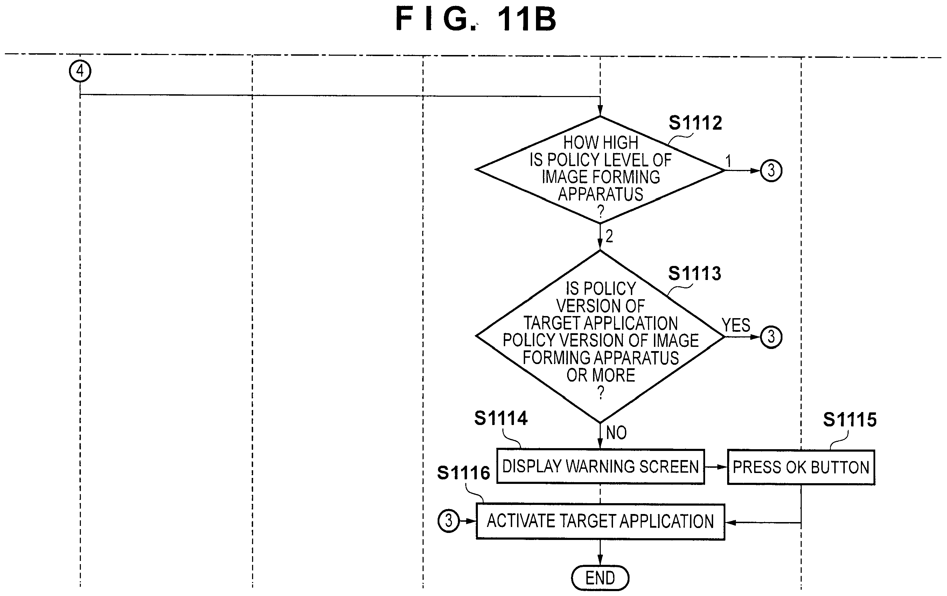

FIGS. 11A and 11B are flowcharts illustrating the flow in which an extended program 303 is activated according to the policy edited in the flowchart of FIG. 4. FIGS. 11A and 11B start with the step in which the user instructs activation of an extended program 303 on the PC 102, and ends with the step in which the application install unit 307 checks the policy stored in the policy storage unit 313 and then activates the corresponding extended program 303.

In step S1101, the user instructs activation of an extended program 303 on the PC 102. The user using software such as a browser (not shown) on the PC 102 to let the application management screen 601 be displayed, and instructs an activation operation of the desired extended program 303 by pressing the corresponding activation button 602. Steps S1102 to S1111 are the same as steps S1002 to S1011 of FIG. 10A and thus descriptions thereof are omitted.

In step S1112, the application install unit 307 determines the policy level of the image forming apparatus 101 based on the result returned from the policy storage unit 313. If the policy level is "1", the procedure advances to step S1116, and if the policy level is "2", the procedure advances to step S1113.

In step S1113, the application install unit 307 compares the application policy version 802 described in the manifest file 801 of the extended program 303 with the device policy version of the image forming apparatus 101. If the application policy version 802 of the extended program 303 is the device policy version of the image forming apparatus 101 or more (YES in step S1113), the procedure advances to step S1116, and otherwise (NO in S1113) to step S1114.

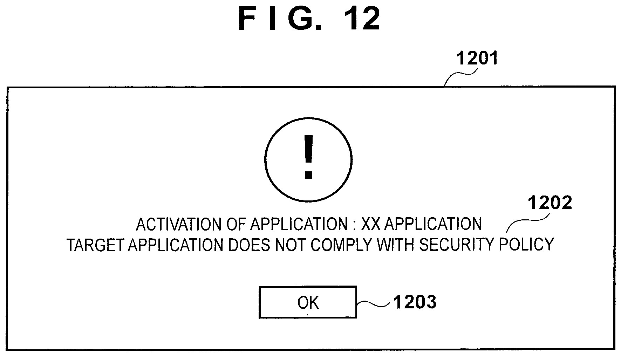

In step S1114, the application install unit 307 displays a warning screen 1201. FIG. 12 shows an example of the warning screen. A message 1202 is a message for warning that the extended program 303 does not comply with the policy. Note that the message is an example, and the present invention is not limited to this. An OK button 1203 is a button that is used when the user confirms the warning screen 1201 to shift the screen to the application management screen 601. Note that the warning screen 1201 may be configured to include a separate cancel button so that activation of an application can be cancelled.

In step S1115, the user presses the OK button 1203 on the warning screen 1201. When the OK button 1203 has been pressed, the screen shifts to the application management screen 601. In step S1116, the application install unit 307 activates the extended program 303.

With the above-described procedures, when the user has instructed to activate an extended program 303, the image forming apparatus 101 can check whether or not the target extended program 303 complies with the policy and perform control according to the policy level.

On the other hand, the activated extended program 303 itself will operate while confirming a policy. Hereinafter, the flow in which the activated extended program 303 operates while confirming a policy will be described with reference to a flowchart.

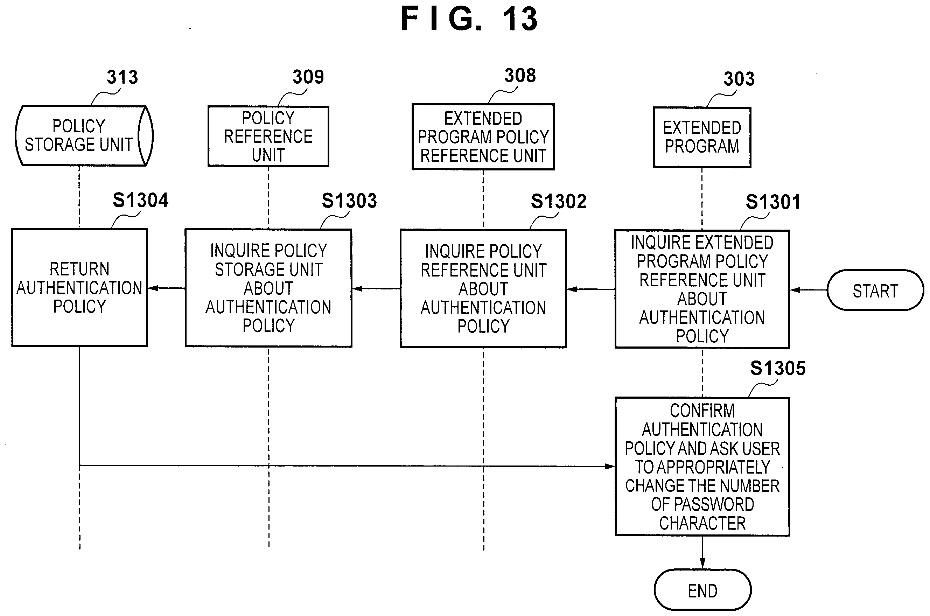

FIG. 13 shows the flowchart illustrating the flow in which the extended program 303 activated in the flowchart of FIGS. 11A and 11B operates in compliance with a policy stored in the policy storage unit 313. The following will describe, as an example, the flow in which the extended program 303 operates in compliance with an authentication policy when using a password.

In step S1301, the extended program 303 inquires the extended program policy reference unit 308 about the authentication policy. In step S1302, the extended program policy reference unit 308 inquires the policy reference unit 309 about the authentication policy. In step S1303, the policy reference unit 309 inquires the policy storage unit 313 about the authentication policy. In step S1304, the policy storage unit 313 returns the authentication policy to the extended program 303 via the policy reference unit 309. In step S1305, the extended program 303 checks the authentication policy, and prompts the user to change the password in compliance with the authentication policy.

With the above-described procedures, the extended program 303 can operate in compliance with the policy set in the image forming apparatus 101.

According to the present embodiment, the user can set an arbitrary policy in the image forming apparatus 101, check policy information of an extended program 303, and activate and use the extended program 303 in compliance with the policy.

### Second Embodiment

The present embodiment will describe an aspect in which the policy level or the policy editing screen is expanded. Cases according to the present embodiment include, similarly to the first embodiment, the following operations of a user:
I. The user edits a policy;
II. The user confirms policy information of an extended program; and
III. The user activates the extended program.

The system configuration, the hardware configuration, and the software configuration of the present embodiment are the same as those in the first embodiment, and thus descriptions thereof are omitted.

### Processing Flow

Hereinafter, processing in each operation stage by the user according to the present embodiment will be described.

### I. The user edits a policy;

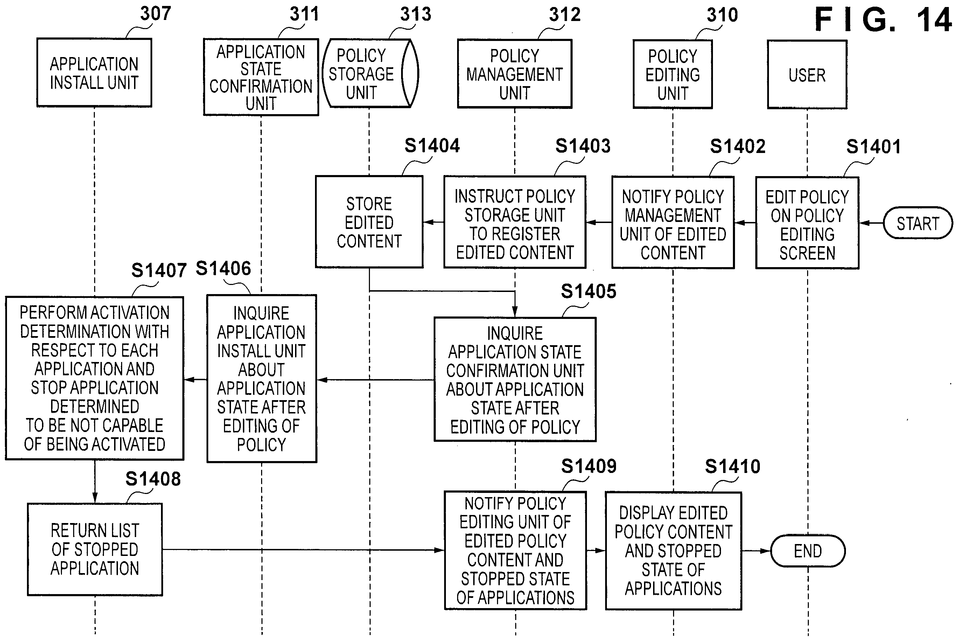

FIG. 14 shows the flowchart in which the user edits a policy on the policy editing screen (FIGS. 5A to 5C). The present embodiment differs from the first embodiment in that, when editing a policy, the user can confirm an activation state of an extended program 303 after editing of the policy.

In step S1401, the user edits a policy on the policy editing screen (FIGS. 5A to 5C). In step S1402, the policy editing unit 310 notifies the policy management unit 312 of the policy content that was edited by the user. In step S1403, the policy management unit 312 registers the edited policy content in the policy storage unit 313. In step S1404, the policy storage unit 313 stores the edited policy content.

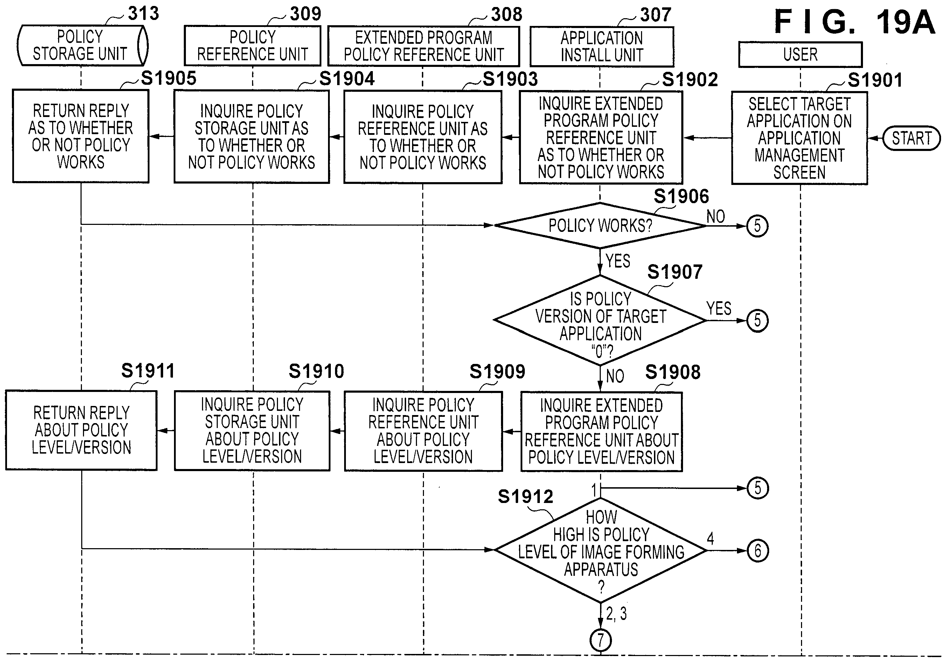

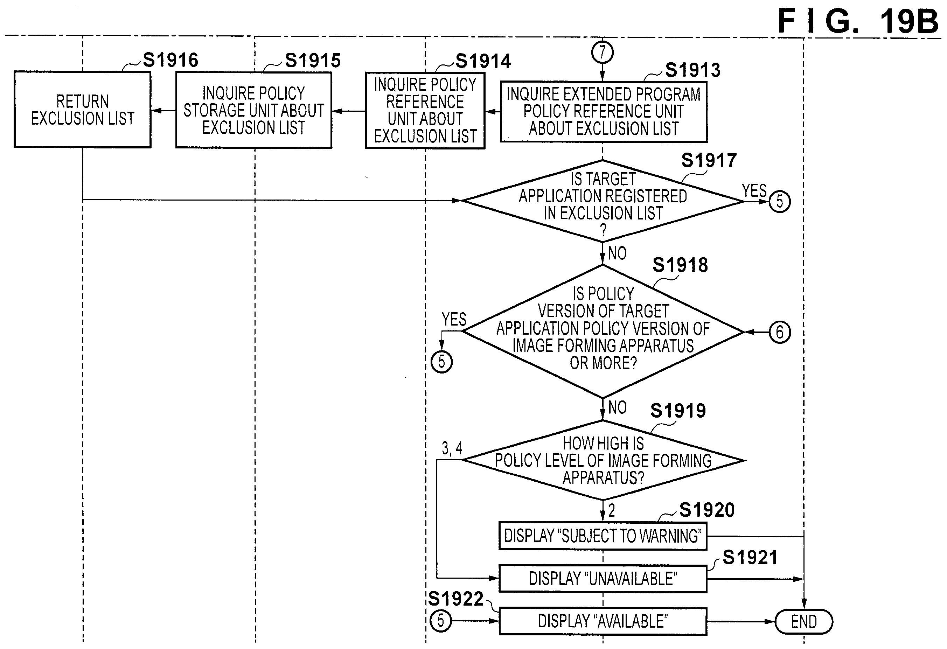

In step S1405, the policy management unit 312 inquires the application state confirmation unit 311 about the activation states of the extended programs 303 after editing of the policy. In step S1406, the application state confirmation unit 311 inquires the application install unit 307 about the application states after editing of the policy. In step S1407, the application install unit 307 performs activation determination with respect to each extended program 303, and stops an extended program 303 that was determined to be not capable of being activated. The activation determination performed by the application install unit 307 will be described in detail with reference to FIGS. 19A and 19B.

In step S1408, the application install unit 307 notifies the policy management unit 312 of a list of the stopped extended programs 303. In step S1409, the policy management unit 312 notifies the policy editing unit 310 of the edited policy content and the list of the stopped extended programs 303. In step S1410, the policy editing unit 310 displays the edited policy content and the list of the extended programs 303 that were stopped after the editing.

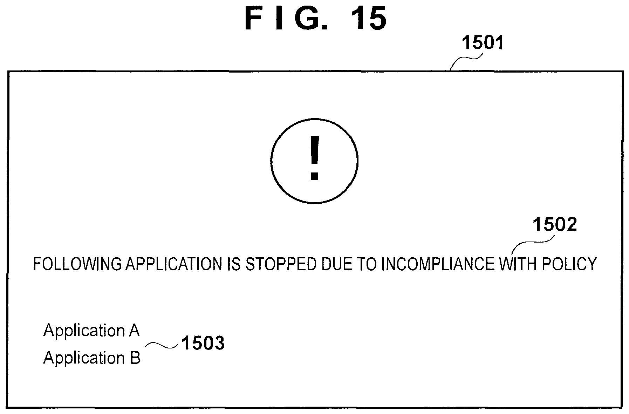

FIG. 15 is an example of a stopped application list display screen 1501. A message 1502 is a message for indicating that the extended programs 303 are stopped because they do not comply with the policy. Note that the message is an example, and the present invention is not limited to this. A list 1503 is a list of stopped extended programs 303.

With the above-described procedures, the user can confirm, when editing a policy on the policy editing screen (FIGS. 5A to 5C), stop of the extended program 303 that does not comply with the edited policy, and the list of the stopped extended programs 303.

### II. The user confirms policy information of an extended program;

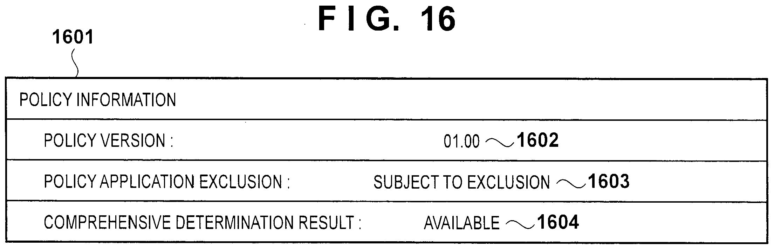

FIG. 16 shows an example of a configuration of a policy information screen 1601 according to the present embodiment. An application policy version 1602 is the same as the application policy version 702 of FIG. 7. A policy application exclusion 1603 indicates whether or not the program is an application that is subject to exclusion from policy application. If a target extended program 303 is registered in an exclusion list, "subject to exclusion" is displayed in the field of the policy application exclusion 1603. Note that the message content is not limited to this, and other message content may be displayed according to the determination result.

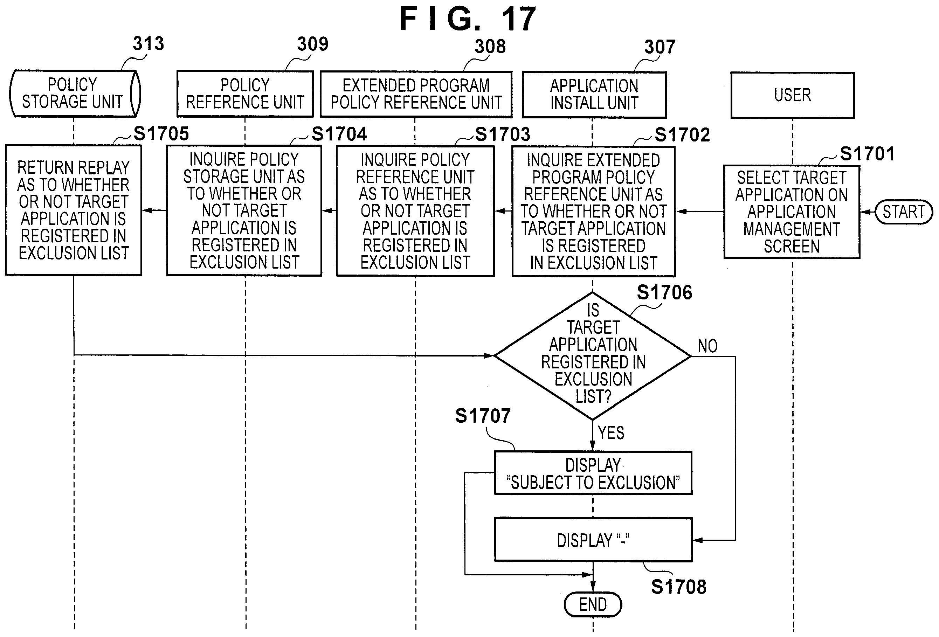

FIG. 17 shows the flowchart until the policy application exclusion 1603 of FIG. 16 is displayed.

In step S1701, the user selects a target extended program 303 on the application management screen 601. The target extended program 303 is selected by the user pressing the corresponding application name 603. In step S1702, the application install unit 307 inquires the extended program policy reference unit 308 as to whether or not the target extended program 303 is designated in the exclusion list.

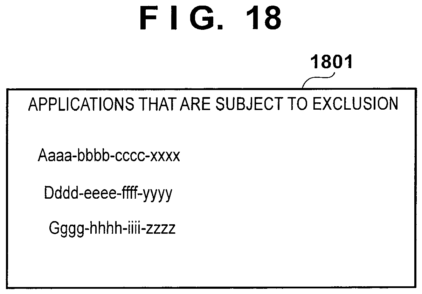

FIG. 18 shows an example of the exclusion list. An exclusion list 1801 is stored in the policy storage unit 313, and IDs for respective extended programs 303 are registered in advance and thereby a registered extended program 303 can be defined as a program that is subject to exclusion from policy application. In other words, it is possible to prohibit activation of applications other than a predetermined application. Note that registration in the exclusion list is made by a user performing input or importing a file via the policy editing screen (FIGS. 5A to 5C).

In step S1703, the extended program policy reference unit 308 inquires the policy reference unit 309 as to whether or not the target extended program 303 is registered in the exclusion list. In step S1704, the policy reference unit 309 asks the policy storage unit 313 to send the exclusion list. In step S1705, the policy storage unit 313 returns the exclusion list to the application install unit 307 via the policy reference unit 309.

In step S1706, the application install unit 307 determines, based on the obtained exclusion list, whether or not the target extended program 303 is registered in the exclusion list. If it is determined that the target extended program 303 is registered in the exclusion list and is subject to exclusion (YES in step S1706), the procedure advances to step S1707, and if it is determined that the target extended program 303 is not subject to exclusion (NO in step S1706), the procedure advances to step S1708. In step S1707, the application install unit 307 displays "subject to exclusion" in the item of the policy application exclusion 1603 of the policy information screen 1601. In step S1708, the application install unit 307 displays "-" in the item of the policy application exclusion 1603 of the policy information screen 1601.

With the above-described procedures, whether or not the target extended program 303 is subject to exclusion from policy application is displayed in the item of the policy application exclusion 1603 on the policy information screen 1601.

A comprehensive determination result 1604 of the policy information screen 1601 of FIG. 16 is the same as the comprehensive determination result 703 of FIG. 7 but description will be given with reference to FIGS. 19A and 19B since the flowchart until the comprehensive determination result is displayed is different. FIGS. 19A and 19B are the flowcharts illustrating the flow until the comprehensive determination result 1604 is displayed. The present flowchart starts with the step in which the user selects a target extended program 303 on the application management screen 601, and ends with the step in which the application install unit 307 displays a result in the field of the comprehensive determination result 1604.

In step S1901, the user selects an extended program 303. The user selects a target extended program 303 by pressing the corresponding application name 603 on the application management screen 601. Steps S1902 to S1911 are the same as steps S1002 to S1011 of FIG. 10A, and thus descriptions thereof are omitted.

In step S1912, the application install unit 307 determines the policy level stored in the policy storage unit 313. If the policy level is "1", the procedure advances to step S1922, and if the policy level is "2" or "3", the procedure advances to step S1913, and if the policy level is "4", the procedure advances to step S1918. Steps S1913 to S1916 are the same as step S1702 to S1705 of FIG. 17, and thus descriptions thereof are omitted.

In step S1917, the application install unit 307 determines whether or not the target extended program 303 is registered in the exclusion list. If the target extended program 303 is registered in the exclusion list (YES in step S1917), the procedure advances to step S1922, and if the target extended program 303 is not registered in the exclusion list (NO in step S1917), the procedure advances to step S1918,

In step S1918, the application install unit 307 compares the application policy version 802 of the target extended program 303 with the device policy version stored in the policy storage unit 313. If the application policy version of the extended program 303 is the device policy version of the image forming apparatus 101 or more (YES in step S1918), the procedure advances to step S1922, and otherwise (NO in step S1918) to step S1919.

In step S1919, the application install unit 307 determines the policy level stored in the policy storage unit 313. If the policy level is "2", the procedure advances to step S1920, and if the policy level is "3" or "4", the procedure advances to step S1921. In step S1920, the application install unit 307 displays "subject to warning" in the field of the comprehensive determination result 1604 on the policy information screen 1601. In step S1921, the application install unit 307 displays "not available" in the field of the comprehensive determination result 1604 on the policy information screen 1601. In step S1922, the application install unit 307 displays "available" in the field of the comprehensive determination result 1604 on the policy information screen 1601. Note that the messages that are displayed in steps S1920 to S1922 are not limited to these, and other message contents may be displayed according to the determination result.

With the above-described procedures, it is possible to display the result in the field of the comprehensive determination result 1604 on the policy information screen 1601, enabling the user to confirm policy information of a target extended program 303 on the policy information screen 1601.

### III. The user activates an extended program;

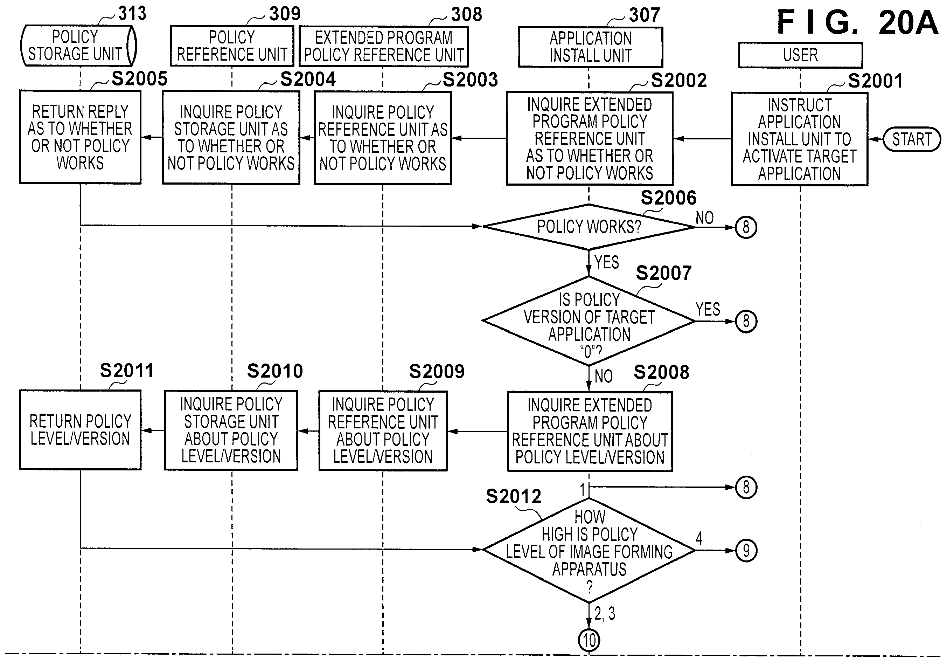

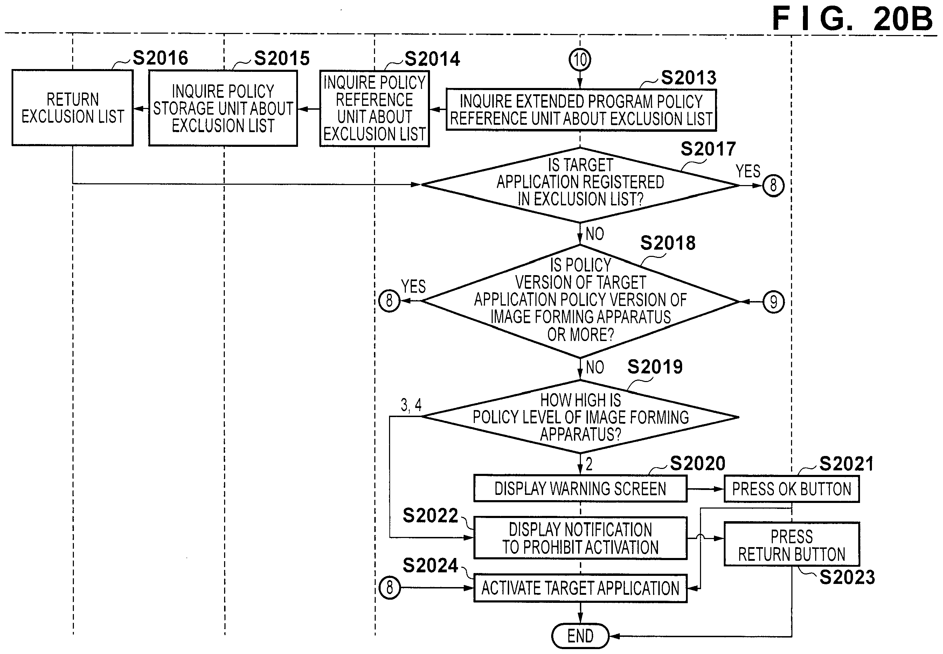

FIGS. 20A and 20B show the flowchart in which the user activates an extended program 303 according to the present embodiment. The present flowchart starts with the step in which the user instructs activation of a target extended program 303 on the application management screen 601. And the flowchart ends with the step in which the application install unit 307 activates the target extended program 303 or displays an activation prohibiting screen for prohibiting activation of the target extended program 303.

In step S2001, the user instructs activation of an extended program 303 on the application management screen 601. The user instructs activation of a target extended program 303 by pressing the corresponding activation button 602 on the application management screen 601. Steps S2002 to S2018 are the same as steps S1902 to S1918 of FIGS. 19A and 19B, and descriptions thereof are omitted.

In step S2019, the application install unit 307 determines the policy level stored in the policy storage unit 313. If the policy level is "2", the procedure advances to step S2020, and if the policy level is "3" or "4", the procedure advances to step S2022.

In step S2020, the application install unit 307 displays the warning screen 1201 shown in FIG. 12. In step S2021, the screen shifts to the application management screen 601 in response to the user's pressing the OK button 1203 on the warning screen 1201, and then the procedure advances to step S2024. In step S2022, the application install unit 307 displays a notification to prohibit activation.

FIG. 21 shows an example of an activation prohibiting screen 2101 according to the present embodiment. A message 2102 is a message indicating that the target extended program 303 cannot be activated since it does not comply with the policy. Note that the displayed message is an example, and the present invention is not limited to this. A return button 2103 is a button for shifting the screen to the application management screen 601 by being pressed by the user after the message 2102 has been confirmed.

In step S2023, the user accepts that the return button 2103 on the activation prohibiting screen 2101 has been pressed. With this operation, the screen returns to the application management screen 601. In step S2024, the application install unit 307 activates the target extended program 303.

The user can thus activate the extended program 303 that complies with the policy. According to the present embodiment, the user can edit a policy, confirm policy information of an extended program 303, and activate the extended program 303.

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing apparatus (101) comprising:
providing means (308) configured to provide an interface via which a policy version of a security policy for restricting an operation of an application can be inquired about, wherein the security policy comprises one or more policy setting items and is set in the information processing apparatus; and
installing means (307) configured to install an application that has declarative information in which a policy version is described,
**characterized in that**,
the installing means is further configured to perform an inquiry about the policy version of the security policy set in the information processing apparatus via the interface provided by the providing means, to compare the policy version of the security policy that is obtained in response to the inquiry, with the policy version described in the declarative information of the application, and to restrict an operation of the installed application if the policy version described in the declarative information of the application is lower than the policy version that is obtained in response to the inquiry, and **in that**,
when a new policy setting item is added to the security policy set in the information processing apparatus, the policy version of the security policy set in the information processing apparatus is incremented.

2. The information processing apparatus according to claim 1,
wherein the installing means is configured to provide a management screen for instructing activation of the application, and to perform the inquiry when having received an activation instruction via the management screen.

3. The information processing apparatus according to claim 2,
wherein the management screen is configured to display the declarative information of the application and information on operation restriction with respect to the application.

4. The information processing apparatus according to any one of claims 1 to 3, further comprising:
editing means configured to accept editing of the security policy set in the information processing apparatus,
wherein the installing means is further configured to perform the inquiry when having accepted editing of the security policy by the editing means.

5. The information processing apparatus according to claim 4,
wherein the installing means is further configured to display, when a content of operation restriction with respect to the application has been changed by editing of the security policy accepted by the editing means, a display screen that indicates the change of the content.

6. The information processing apparatus according to claim 5,
wherein the display screen is configured to display a list of applications with respect to which a content of operation restriction has been changed by editing of the security policy accepted by the editing means.

7. The information processing apparatus according to any one of claims 1 to 6,
wherein the providing means is further configured to provide an interface via which a level of operation restriction with respect to the application can be inquired about, and
wherein the installing means is further configured to perform an inquiry about the level of operation restriction with respect to the application via the interface provided by the providing means, and restricts an operation of the application according to the level of operation restriction.

8. The information processing apparatus according to claim 7,
wherein the level of operation restriction is any one of:
no restriction;
output of a warning at the time of activation of an application that does not comply with the security policy;
prohibition of activation of an application that does not comply with the security policy, other than a predetermined application; and
prohibition of activation of an application that does not comply with the security policy.

9. The information processing apparatus according to any one of claims 1 to 8,
wherein the providing means is further configured to provide an interface via which can be inquired about whether or not the application is subject to exclusion from operation restriction, and
wherein the installing means is further configured to perform an inquiry as to whether or not the application is subject to exclusion from operation restriction via the interface provided by the providing means, and does not restrict the operation of the application if the application is subject to exclusion from operation restriction.

10. The information processing apparatus according to claim 9,
wherein the installing means is configured to display, as a result of the inquiry, the application that is subject to exclusion from operation restriction.

11. The information processing apparatus according to any one of claims 1 to 10,
wherein the declarative information can define whether or not the application is subject to operation restriction, and
the installing means is further configured not to restrict the operation of the application if the application is defined, in the declarative information, as being subject to exclusion from operation restriction.

12. The information processing apparatus according to any one of claims 1 to 11,
wherein the application installed by the installing means inquires about the security policy set in the information processing apparatus via the interface provided by the providing means, and operates in compliance with the security policy.

13. The information processing apparatus according to any one of claims 1 to 12,
wherein the declarative information is described in a manifest file.

14. The information processing apparatus according to any one of claims 1 to 13,
wherein the providing means is further configured to provide an interface via which information indicating whether or not the security policy set in the information processing apparatus is active, can be inquired about,
wherein the installing means is further configured to perform an inquiry about whether or not the security policy set in the information processing apparatus is active, via the interface provided by the providing means, and
wherein the installing means is further configured not to restrict the operation of the installed application according to the security policy set in the information processing apparatus if the security policy setting item is not active.

15. A method for controlling an information processing apparatus (101), the method comprising:
a providing step of providing an interface via which a policy version of a security policy for restricting an operation of an application can be inquired about, wherein the security policy comprises one or more policy setting items and is set in the information processing apparatus; and
an installing step installing an application that has declarative information in which a policy version is described;
**characterized in that**,
in the installing step, an inquiry about the policy version of the security policy set in the information processing apparatus is performed via the interface, the policy version of the security policy that is obtained in response to the inquiry, and the policy version described in the declarative information of the application are compared, and an operation of the installed application is restricted if the policy version described in the declarative information of the application is lower than the policy version that is obtained in response to the inquiry, and **in that**,
when a new policy setting item is added to the security policy set in the information processing apparatus, the policy version of the security policy set in the information processing apparatus is incremented.

16. A program for causing a computer (101) to function as the information processing apparatus according to any one of claims 1 to 14.

## Patentansprüche

1. Informationsverarbeitungsvorrichtung (101), umfassend:
eine Bereitstelleinrichtung (308), die konfiguriert ist, eine Schnittstelle bereitzustellen, über die eine Richtlinienversion einer Sicherheitsrichtlinie zum Einschränken eines Betriebs einer Anwendung abgefragt werden kann, wobei die Sicherheitsrichtlinie ein oder mehrere Richtlinieneinstellungselemente umfasst und in der Informationsverarbeitungsvorrichtung eingestellt wird; und
eine Installiereinrichtung (307), die zum Installieren einer Anwendung mit deklarativer Information konfiguriert ist, in welcher eine Richtlinienversion beschrieben wird,
**dadurch gekennzeichnet, dass**
die Installiereinrichtung ferner konfiguriert ist, über die durch die Bereitstelleinrichtung bereitgestellte Schnittstelle eine Abfrage über die Richtlinienversion der in der Informationsverarbeitungsvorrichtung eingestellten Sicherheitsrichtlinie durchzuführen, die als Antwort auf die Abfrage erhaltene Richtlinienversion der Sicherheitsrichtlinie mit der in der deklarativen Information der Anwendung beschriebenen Richtlinienversion zu vergleichen, und einen Betrieb der installierten Anwendung einzuschränken, falls die in der deklarativen Information der Anwendung beschriebene Richtlinienversion niedriger ist als die als Antwort auf die Abfrage erhaltene Richtlinienversion, und dadurch, dass
wenn der in der Informationsverarbeitungsvorrichtung eingestellten Sicherheitsrichtlinie ein neues Richtlinieneinstellungselement hinzugefügt wird, die Richtlinienversion der in der Informationsverarbeitungsvorrichtung eingestellten Sicherheitsrichtlinie erhöht wird.

2. Informationsverarbeitungsvorrichtung nach Anspruch 1,
wobei die Installiereinrichtung konfiguriert ist, einen Verwaltungsbildschirm bereitzustellen, um Aktivieren der Anwendung anzuweisen, und die Abfrage durchzuführen, wenn sie über den Verwaltungsbildschirm eine Aktivierungsanweisung erhalten hat.

3. Informationsverarbeitungsvorrichtung nach Anspruch 2,
wobei der Verwaltungsbildschirm konfiguriert ist, die deklarative Information der Anwendung und Information über Betriebseinschränkung bezüglich der Anwendung anzuzeigen.

4. Informationsverarbeitungsvorrichtung nach einem der Ansprüche 1 bis 3, weiterhin umfassend:
eine Editiereinrichtung, die konfiguriert ist, Editieren der in der Informationsverarbeitungsvorrichtung eingestellten Sicherheitsrichtlinie anzunehmen,
wobei die Installiereinrichtung ferner konfiguriert ist, die Abfrage durchzuführen, wenn sie Editieren der Sicherheitsrichtlinie durch die Editiereinrichtung angenommen hat.

5. Informationsverarbeitungsvorrichtung nach Anspruch 4,
wobei die Installiereinrichtung weiterhin konfiguriert ist, wenn ein Inhalt einer Betriebseinschränkung bezüglich der Anwendung durch von der Editiereinrichtung angenommenes Editieren der Sicherheitsrichtlinie geändert worden ist, einen Anzeigebildschirm anzuzeigen, der die Änderung des Inhalts angibt.

6. Informationsverarbeitungsvorrichtung nach Anspruch 5,
wobei der Anzeigebildschirm konfiguriert ist, eine Liste von Anwendungen anzuzeigen, mit Bezug auf welche ein Inhalt einer Betriebseinschränkung durch durch die Editiereinrichtung angenommenes Editieren der Sicherheitsrichtlinie geändert worden ist.

7. Informationsverarbeitungsvorrichtung nach einem der Ansprüche 1 bis 6,
wobei die Bereitstelleinrichtung weiterhin konfiguriert ist, eine Schnittstelle bereitzustellen, über die eine Stufe an Betriebseinschränkung bezüglich der Anwendung abgefragt werden kann, und
wobei die Installiereinrichtung weiterhin konfiguriert ist, über die durch die Bereitstelleinrichtung bereitgestellte Schnittstelle eine Abfrage über die Stufe an Betriebseinschränkung bezüglich der Anwendung durchzuführen, und einen Betrieb der Anwendung gemäß der Stufe an Betriebseinschränkung einschränkt.

8. Informationsverarbeitungsvorrichtung nach Anspruch 7,
wobei die Stufe an Betriebseinschränkung eine der folgenden ist:
keine Einschränkung;
Ausgeben einer Warnung zur Zeit der Aktivierung einer Anwendung, die die Sicherheitsrichtlinie nicht erfüllt;
Verbieten des Aktivierens einer Anwendung, die die Sicherheitsrichtlinie nicht erfüllt, abgesehen von einer vorbestimmten Anwendung; und
Verbieten des Aktivierens einer Anwendung, die die Sicherheitsrichtlinie nicht erfüllt.

9. Informationsverarbeitungsvorrichtung nach einem der Ansprüche 1 bis 8,
wobei die Bereitstelleinrichtung ferner konfiguriert ist, eine Schnittstelle bereitzustellen, über die abgefragt werden kann, ob die Anwendung von Betriebseinschränkung ausgenommen ist, und
wobei die Installiereinrichtung weiterhin konfiguriert ist, über die durch die Bereitstelleinrichtung bereitgestellte Schnittstelle eine Abfrage durchzuführen, ob die Anwendung von Betriebseinschränkung ausgenommen ist, und den Betrieb der Anwendung nicht einschränkt, falls die Anwendung von Betriebseinschränkung ausgenommen ist.

10. Informationsverarbeitungsvorrichtung nach Anspruch 9,
wobei die Installiereinrichtung konfiguriert ist, als ein Ergebnis der Abfrage die Anwendung anzuzeigen, die von Betriebseinschränkung ausgenommen ist.

11. Informationsverarbeitungsvorrichtung nach einem der Ansprüche 1 bis 10,
wobei die deklarative Information definieren kann, ob die Anwendung einer Betriebseinschränkung unterliegt oder nicht, und
die Installiereinrichtung weiterhin konfiguriert ist, den Betrieb der Anwendung nicht einzuschränken, falls die Anwendung in der deklarativen Information als von Betriebseinschränkung ausgenommen definiert wird.

12. Informationsverarbeitungsvorrichtung nach einem der Ansprüche 1 bis 11,
wobei die durch die Installiereinrichtung installierte Anwendung über die durch die Bereitstelleinrichtung bereitgestellte Schnittstelle die in der Informationsverarbeitungsvorrichtung eingestellte Sicherheitsrichtlinie abfragt und entsprechend der Sicherheitsrichtlinie arbeitet.

13. Informationsverarbeitungsvorrichtung nach einem der Ansprüche 1 bis 12,
wobei die deklarative Information in einer Manifest-Datei beschrieben ist.

14. Informationsverarbeitungsvorrichtung nach einem der Ansprüche 1 bis 13,
wobei die Bereitstelleinrichtung weiterhin konfiguriert ist, eine Schnittstelle bereitzustellen, über die Information abgefragt werden kann, die angibt, ob die in der Informationsverarbeitungsvorrichtung eingestellte Sicherheitsrichtlinie aktiv ist,
wobei die Installiereinrichtung weiterhin konfiguriert ist, über die durch die Bereitstelleinrichtung bereitgestellte Schnittstelle eine Abfrage darüber durchzuführen, ob die in der Informationsverarbeitungsvorrichtung eingestellte Sicherheitsrichtlinie aktiv ist, und
wobei die Installiereinrichtung weiterhin konfiguriert ist, den Betrieb der installierten Anwendung nicht gemäß der in der Informationsverarbeitungsvorrichtung eingestellten Sicherheitsrichtlinie einzuschränken, falls das Sicherheitsrichtlinieneinstellungselement nicht aktiv ist.

15. Verfahren zum Steuern einer Informationsverarbeitungsvorrichtung (101), wobei das Verfahren umfasst:
einen Bereitstellschritt des Bereitstellens einer Schnittstelle, über die eine Richtlinienversion einer Sicherheitsrichtlinie zum Einschränken eines Betriebs einer Anwendung abgefragt werden kann, wobei die Sicherheitsrichtlinie ein oder mehrere Richtlinieneinstellungselemente umfasst und in der Informationsverarbeitungsvorrichtung eingestellt wird; und
einen Installierschritt des Installierens einer Anwendung, die deklarative Information aufweist, in der eine Richtlinienversion beschrieben wird,
**dadurch gekennzeichnet, dass**
im Installierschritt über die Schnittstelle eine Abfrage über die Richtlinienversion der in der Informationsverarbeitungsvorrichtung eingestellten Sicherheitsrichtlinie durchgeführt wird, die als Antwort auf die Abfrage erhaltene Richtlinienversion der Sicherheitsrichtlinie mit der in der deklarativen Information der Anwendung beschriebenen Richtlinienversion verglichen wird, und ein Betrieb der installierten Anwendung eingeschränkt wird, falls die in der deklarativen Information der Anwendung beschriebene Richtlinienversion niedriger ist als die als Antwort auf die Abfrage erhaltene Richtlinienversion, und dadurch, dass
wenn der in der Informationsverarbeitungsvorrichtung eingestellten Sicherheitsrichtlinie ein neues Richtlinieneinstellungselement hinzugefügt wird, die Richtlinienversion der in der Informationsverarbeitungsvorrichtung eingestellten Sicherheitsrichtlinie erhöht wird.

16. Programm zum Veranlassen eines Computers (101), als die Informationsverarbeitungsvorrichtung nach einem der Ansprüche 1 bis 14 zu fungieren.

## Revendications

1. Appareil de traitement d'informations (101) comprenant :
un moyen de fourniture (308) configuré pour fournir une interface par l'intermédiaire de laquelle il est possible d'effectuer une requête concernant une version de politique d'une politique de sécurité destinée à limiter un fonctionnement d'une application,
dans lequel la politique de sécurité comprend un ou plusieurs éléments de réglage de politique et est réglée dans l'appareil de traitement d'informations ; et
un moyen d'installation (307) configuré pour installer une application qui contient des informations déclaratives dans lesquelles une version de politique est décrite,
**caractérisé en ce que**
le moyen d'installation est en outre configuré pour effectuer une requête concernant la version de politique de la politique de sécurité réglée dans l'appareil de traitement d'informations par l'intermédiaire de l'interface fournie par le moyen de fourniture, pour comparer la version de politique de la politique de sécurité qui est obtenue en réponse à la requête, à la version de politique décrite dans les informations déclaratives de l'application, et pour limiter un fonctionnement de l'application installée si la version de politique décrite dans les informations déclaratives de l'application est inférieure à la version de politique qui est obtenue en réponse à la requête, et **en ce que**,
lorsqu'un nouvel élément de réglage de politique est ajouté à la politique de sécurité réglée dans l'appareil de traitement d'informations, la version de politique de la politique de sécurité réglée dans l'appareil de traitement d'informations est incrémentée.

2. Appareil de traitement d'informations selon la revendication 1,
dans lequel le moyen d'installation est configuré pour fournir un écran de gestion permettant d'ordonner l'activation de l'application, et pour effectuer la requête lorsqu'il a reçu une instruction d'activation par l'intermédiaire de l'écran de gestion.

3. Appareil de traitement d'informations selon la revendication 2,
dans lequel l'écran de gestion est configuré pour afficher les informations déclaratives de l'application et des informations concernant une limitation de fonctionnement relative à l'application.

4. Appareil de traitement d'informations selon l'une quelconque des revendications 1 à 3, comprenant en outre :
un moyen d'édition configuré pour accepter une édition de la politique de sécurité réglée dans l'appareil de traitement d'informations,
dans lequel le moyen d'installation est en outre configuré pour effectuer la requête lorsqu'il a accepté une édition de la politique de sécurité par le moyen d'édition.

5. Appareil de traitement d'informations selon la revendication 4,
dans lequel le moyen d'installation est en outre configuré pour afficher, lorsqu'un contenu d'une limitation de fonctionnement relative à l'application a été changé par édition de la politique de sécurité acceptée par le moyen d'édition, un écran d'affichage qui indique le changement du contenu.

6. Appareil de traitement d'informations selon la revendication 5,
dans lequel l'écran d'affichage est configuré pour afficher une liste d'applications relativement auxquelles un contenu d'une limitation de fonctionnement a été changé par édition de la politique de sécurité acceptée par le moyen d'édition.

7. Appareil de traitement d'informations selon l'une quelconque des revendications 1 à 6,
dans lequel le moyen de fourniture est en outre configuré pour fournir une interface par l'intermédiaire de laquelle il est possible d'effectuer une requête concernant un niveau de limitation de fonctionnement relativement à l'application, et
dans lequel le moyen d'installation est en outre configuré pour effectuer une requête concernant le niveau de limitation de fonctionnement relativement à l'application par l'intermédiaire de l'interface fournie par le moyen de fourniture, et limite un fonctionnement de l'application conformément au niveau de la limitation de fonctionnement.

8. Appareil de traitement d'informations selon la revendication 7,
dans lequel le niveau de limitation de fonctionnement est l'une quelconque de :
l'absence de limitation ;
la fourniture en sortie d'un avertissement au moment de l'activation d'une application qui ne respecte pas la politique de sécurité ;
l'interdiction de l'activation d'une application qui ne respecte pas la politique de sécurité, autre qu'une application prédéterminée ; et
l'interdiction de l'activation d'une application qui ne respecte pas la politique de sécurité.

9. Appareil de traitement d'informations selon l'une quelconque des revendications 1 à 8,
dans lequel le moyen de fourniture est en outre configuré pour fournir une interface par l'intermédiaire de laquelle il est possible d'effectuer une requête pour déterminer si oui ou non l'application fait l'objet d'une exclusion d'une limitation de fonctionnement, et
dans lequel le moyen d'installation est en outre configuré pour effectuer une requête pour déterminer si oui ou non l'application fait l'objet d'une exclusion d'une limitation de fonctionnement par l'intermédiaire de l'interface fournie par le moyen de fourniture, et ne limite pas le fonctionnement de l'application si l'application fait l'objet d'une exclusion d'une limitation de fonctionnement.

10. Appareil de traitement d'informations selon la revendication 9,
dans lequel le moyen d'installation est configuré pour afficher, en tant que résultat de la requête, l'application qui fait l'objet d'une exclusion d'une limitation de fonctionnement.

11. Appareil de traitement d'informations selon l'une quelconque des revendications 1 à 10,
dans lequel les informations déclaratives peuvent définir si oui ou non l'application fait l'objet d'une limitation de fonctionnement, et
le moyen d'installation est en outre configuré pour ne pas limiter le fonctionnement de l'application si l'application est définie, dans les informations déclaratives, comme faisant l'objet d'une exclusion d'une limitation de fonctionnement.

12. Appareil de traitement d'informations selon l'une quelconque des revendications 1 à 11,
dans lequel l'application installée par le moyen d'installation effectue une requête concernant la politique de sécurité réglée dans l'appareil de traitement d'informations par l'intermédiaire de l'interface fournie par le moyen de fourniture, et fonctionne en conformité avec la politique de sécurité.

13. Appareil de traitement d'informations selon l'une quelconque des revendications 1 à 12,
dans lequel les informations déclaratives sont décrites dans un fichier de manifeste.

14. Appareil de traitement d'informations selon l'une quelconque des revendications 1 à 13,
dans lequel le moyen de fourniture est en outre configuré pour fournir une interface par l'intermédiaire de laquelle il est possible d'effectuer une requête concernant des informations indiquant si oui ou non la politique de sécurité réglée dans l'appareil de traitement d'informations est active,
dans lequel le moyen d'installation est en outre configuré pour effectuer une requête afin de déterminer si oui ou non la politique de sécurité réglée dans l'appareil de traitement d'informations est active, par l'intermédiaire de l'interface fournie par le moyen de fourniture, et
dans lequel le moyen d'installation est en outre configuré pour ne pas limiter le fonctionnement de l'application installée conformément à la politique de sécurité réglée dans l'appareil de traitement d'informations si l'élément de réglage de politique de sécurité n'est pas actif.

15. Procédé destiné à commander un appareil de traitement d'informations (101), le procédé comprenant :
une étape de fourniture consistant à fournir une interface par l'intermédiaire de laquelle il est possible d'effectuer une requête concernant une version de politique d'une politique de sécurité destinée à limiter un fonctionnement d'une application, où la politique de sécurité comprend un ou plusieurs éléments de réglage de politique et est réglée dans l'appareil de traitement d'informations ; et
une étape d'installation consistant à installer une application qui contient des informations déclaratives dans lesquelles une version de politique est décrite ;
**caractérisé en ce que**,
lors de l'étape d'installation, une requête concernant la version de politique de la politique de sécurité réglée dans l'appareil de traitement d'informations est effectuée par l'intermédiaire de l'interface, la version de politique de la politique de sécurité qui est obtenue en réponse à la requête, et la version de politique décrite dans les informations déclaratives de l'application sont comparées, et un fonctionnement de l'application installée est limité si là version de politique décrite dans les informations déclaratives de l'application est inférieure à la version de politique qui est obtenue en réponse à la requête, et **en ce que**,
lorsqu'un nouvel élément de réglage de politique est ajouté à la politique de sécurité réglée dans l'appareil de traitement d'informations, la version de politique de la politique de sécurité réglée dans l'appareil de traitement d'informations est incrémentée.

16. Programme destiné à amener un ordinateur (101) à fonctionner en tant qu'appareil de traitement d'informations selon l'une quelconque des revendications 1 à 14.
